# FASCICULE DE BREVET EUROPEEN

(11) **EP 0 565 468 B1**
(45) Date de publication et mention de la délivrance du brevet: **21.02.1996**
(21) Numéro de dépôt: 93440034.2
(22) Date de dépôt: 07.04.1993
(51) Int. Cl.: B65G 69/28

(54) **Rampe de chargement adossée à actionnement manuel, compensée par ressorts**
Von Hand betätigte, federgestützte, rückseitig befestigte Laderampe
Manually operated, spring-supported dockboard, attached on its backside

(30) Priorité: 07.04.1992 FR 9204521
(43) Date de publication de la demande: 13.10.1993
(73) Titulaire: EXPRESSO FRANCE, S.A.R.L., F-67000 Strasbourg (FR)
(72) Inventeur: Roere, Michel, F-67720 Weyersheim (FR)
(74) Mandataire: Nuss, Pierre

(56) Documents cités:
- EP-A- 0 298 026
- DE-A- 2 950 352
- DE-U- 8 812 582
- FR-A- 2 134 045
- US-A- 3 497 893

## Description

La présente invention concerne le domaine de la manutention, en particulier les équipements de quais de chargement, notamment les rampes de chargement, et a pour objet une telle rampe adossée à actionnement manuel, compensée par ressorts selon le préambule de la revendication 1. Une telle rampe est connue du document FR-A-2 134 045.

Le transbordement des marchandises entre des magasins et des véhicules routiers pose généralement des problèmes, d'une part, de liaison pour permettre l'accès des engins de manutention tels que diables, transpalettes manuels ou électriques, chariots élévateurs et autres, dans les véhicules et, d'autre part, de dénivellation entre le niveau des quais et les planchers des différents véhicules.

Actuellement, ces problèmes sont résolus par utilisation de ponts ou de rampes de chargement de différents types, à savoir sous forme de ponts amovibles à mise en place manuelle, avec ou sans roulettes, de rampes ou de niveleurs mécaniques ou hydrauliques encastrés dans la maçonnerie, de ponts ou de rampes adossés, c'est-à-dire positionnés en nez de quai, ces ponts ou rampes étant relevables manuellement et montés dans un support appelé rail d'accrochage.

Certains de ces ponts peuvent être déplacés latéralement grâce à la prévision d'un moyen de roulement et, en fonction de leur dimension et de leur poids, ils peuvent être équipés d'un moyen de compensation par ressorts ou par vérins à gaz permettant un relevage avec une dépense d'énergie minimale, ce relevage s'effectuant généralement manuellement.

Cependant, dans ces rampes existantes, le rail de roulement et d'accrochage est souvent mal protégé contre l'entrée et le dépôt de salissures à l'intérieur du chemin de roulement, de sorte que leur déplacement est rendu difficile, voire impossible. En outre, le déplacement de telles rampes est assuré par des galets de roulement qui leur servent également d'assise pendant les opérations de transbordement, de sorte que lesdits galets subissent rapidement un matage, ce qui entraîne une mauvaise qualité de roulement. Il en résulte également une fragilisation au niveau des axes des galets.

Par ailleurs, l'utilisation de ressorts de traction en vue de la compensation du poids des rampes, nécessite un système de bras de leviers plus ou moins volumineux empêchant quasiment un positionnement des rampes autrement qu'en nez de quai ou le rendant dans tous les cas peu pratique. Un tel positionnement en nez de quai présente également l'inconvénient, d'une part, de rendre difficile et imprécis l'accostage des véhicules et, d'autre part, de présenter un danger pour le mécanisme ou la rampe lorsqu'un véhicule s'approche trop près du nez de quai.

De plus, avec un tel montage de rampe, il subsiste, de part et d'autre de cette dernière, pendant le chargement, un vide présentant un danger pour le manutentionnaire, les rampes étant généralement d'une largeur inférieure à celle des véhicules.

Quant à l'utilisation de vérins à gaz pour la compensation, elle est d'une efficacité limitée du fait de leur sensibilité trop grande aux différences de températures.

Enfin, les rampes existantes sont généralement bloquées en position verticale par des dispositifs mécaniques devant être débloqués manuellement, de sorte qu'en cas d'oubli d'un tel déblocage le moyen de verrouillage est assez rapidement endommagé et doit être réparé pour ne pas devenir inopérant.

La présente invention a pour but de pallier ces inconvénients.

Elle a, en effet, pour objet une rampe de chargement adossée à actionnement manuel, compensée par ressorts, comportant un moyen de montage avec possibilité de déplacement le long d'un quai, constitué par au moins un chariot de support pivotant de la rampe muni d'au moins un galet de roulement coopérant avec un rail de guidage s'étendant parallèlement au quai, caractérisée en ce que le rail de guidage présente une section transversale en forme de U à branches horizontales de longueurs inégales, la branche supérieure étant la plus longue, le rail étant fixé contre le quai par sa base, qui est prolongée, au niveau de la branche la plus courte, par une aile d'application, la branche la plus longue présentant un rebord de retenue destiné à coopérer avec le ou les chariots de support pivotant de la rampe et la branche la plus courte étant pourvue sur sa face interne d'un profilé de guidage et d'appui coopérant, d'une part, pour le guidage, avec le ou les galets du ou des chariots et, d'autre part, pour la retenue en position de service, directement avec le ou lesdits chariots.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation et en coupe d'une rampe conforme à l'invention, en position de service ;
la figure 2 est une vue partielle correspondant à celle de la figure 1, la rampe étant en position de repos et de déplacement, et
la figure 3 est une vue partielle à plus grande échelle du dispositif de blocage en position relevée de la rampe.

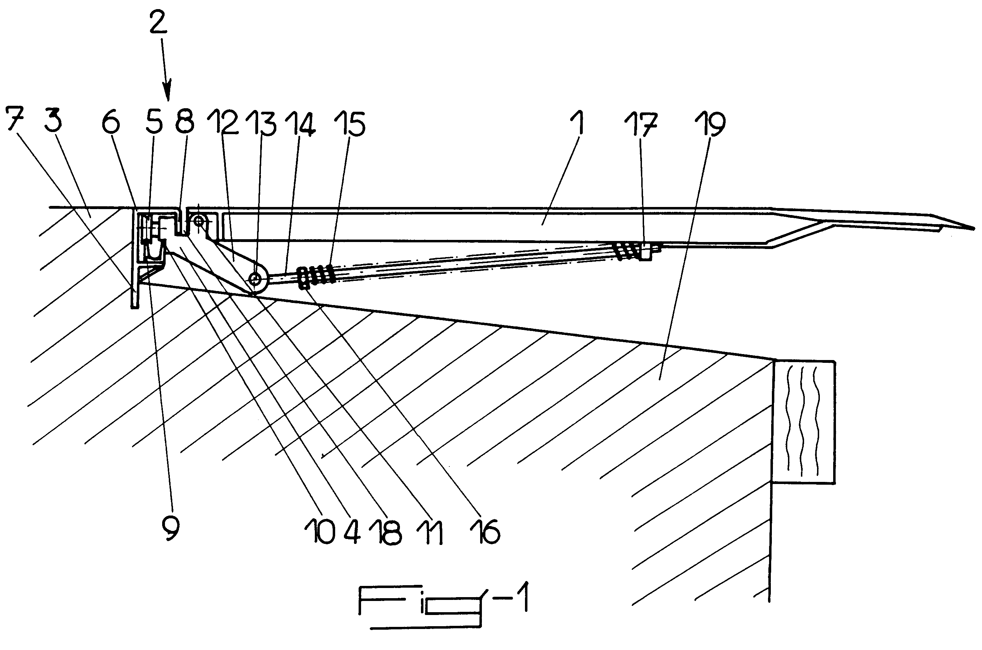

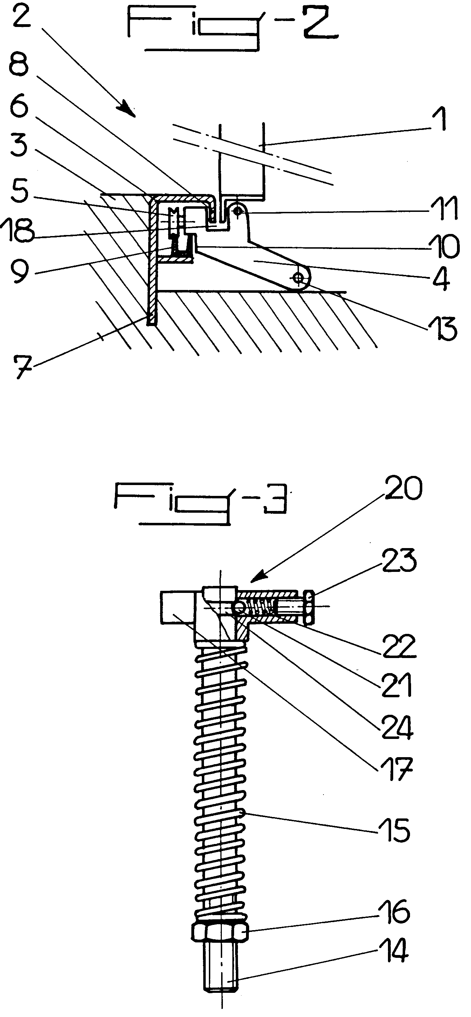

Conformément à l'invention et comme le montrent plus particulièrement, à titre d'exemple, les figures 1 et 2 des dessins annexés, la rampe de chargement adossée 1 à actionnement manuel, compensée par ressorts, qui comporte un moyen 2 de montage avec possibilité de déplacement sur un quai 3, constitué par au moins un chariot 4 de support pivotant de la rampe 1 muni d'au moins un galet de roulement 5 coopérant avec un rail de guidage 6 s'étendant parallèlement au quai 3, est caractérisée en ce que le rail de guidage 6 présente une section transversale en forme de U à branches ou ailes inégales et est fixé contre le quai 3 par son âme qui est prolongée, au niveau de l'aile la plus courte, par une aile d'application 7, l'aile la plus longue étant tournée vers le haut et présentant un rebord de retenue 8 destiné à coopérer avec le ou les chariots 4 de support pivotant de la rampe 1.

Par ailleurs, l'aile la plus courte est pourvue sur sa face interne d'un profilé de guidage et d'appui 9 coopérant, d'une part, pour le guidage, avec le ou les galets 5 du ou des chariots 4, par son aile tournée vers l'intérieur du rail 6 et, d'autre part, pour la retenue en position de service, directement avec le ou lesdits chariots 4, par son aile tournée vers l'extérieur.

Chaque chariot 4 présente avantageusement une section transversale en forme de U, dont l'une des ailes, tournée vers le rail de guidage 6, est munie du ou des galets 5 et, à sa partie inférieure, près de l'âme, d'une surface longitudinale 10, en retrait par rapport à la face extérieure de l'aile et coopérant avec l'aile externe du profilé de guidage et d'appui 9, son aile externe étant pourvue à sa partie supérieure d'un axe 11 de guidage de la rampe 1.

Selon une variante de réalisation de l'invention, au moins un chariot 4 peut être pourvu à sa partie inférieure, dans le prolongement de l'âme et obliquement vers le bas, d'un bras de levier 12, dont l'extrémité libre est munie d'un axe 13 de montage pivotant d'une tige 14 de guidage d'un ressort de compensation 15 s'appuyant à son extrémité inférieure sur un dispositif 16 de réglage de dureté du ressort et à son autre extrémité contre une traverse ou autre dispositif de retenue 17 solidaire de la rampe 1 près de son extrémité opposée, la tige 14 étant guidée en coulissement, par son extrémité libre, dans la traverse ou dispositif de retenue 17.

Selon une caractéristique de l'invention, la rampe 1 est avantageusement montée dans le rail de guidage 6, au moyen d'au moins trois chariots 4, dont l'un au moins est pourvu d'un bras de levier 12 d'articulation d'une tige 14, les deux autres n'étant pas munis d'un tel bras de levier. Il est, en effet, possible de ne prévoir, en fonction de la taille et du poids de la rampe 1 qu'un seul ressort de compensation 15.

Chaque chariot 4 coopère, en outre, par l'espace en forme de rainure 18 délimité entre ses ailes, avec le rebord de retenue 8, qui s'appuie contre son aile pourvue sur sa face externe du ou des galets de roulement 5. La largeur de l'espace en forme de rainure 18 est au moins égale à l'épaisseur du rebord 8 augmentée de celle de la face supérieure de la rampe 1 solidaire de l'axe 11 de guidage en pivotement.

Du fait de la constitution du ou des chariots 4, et comme le montrent plus particulièrement les figures 1 et 2 des dessins annexés, en position de service de la rampe 1, le poids de cette dernière est entièrement reporté, par l'intermédiaire des axes 11 et 13 sur la partie externe du ou des chariots 4 et a tendance à faire basculer ce dernier par rapport à un axe vertical. Ce basculement entraîne une mise en contact, d'une part, de sa surface longitudinale 10 tournée vers le profilé de guidage et d'appui 9 avec ce profilé 9 et, d'autre part, de la face interne de son aile correspondante et délimitant l'espace en forme de rainure 18 avec la face interne du rebord de retenue 8, réalisant ainsi un blocage en position par arc-boutement et entraînant un léger décollement du ou des galets 5 sur l'aile correspondante du profilé de guidage et d'appui 9 (figure 1).

Dans cette position, la rampe 1 est alors bloquée contre tout déplacement transversal et les galets 9 sont protégés contre l'application des charges à transborder, évitant ainsi un matage précoce. En outre, du fait de la constitution même du rail de guidage 6, le déversement éventuel de salissures entre le rail 6 et l'extrémité correspondante de la rampe 1 ne peut pas être effectué dans ledit rail 6, de sorte que sa propreté est préservée et qu'il ne se forme aucune gêne pour le roulement des galets 5.

Dans la position de repos de la rampe 1, c'est-à-dire lorsqu'elle est amenée sensiblement à la verticale, il se crée un déplacement de son centre de gravité qui a pour effet d'annuler les forces d'application de la surface 10 contre l'aile extérieure du profilé 9 et de la face interne du rebord de retenue 8 contre la face correspondante de l'espace en forme de rainure 18 avec un transfert de la charge sur le ou les galets de roulement 5 qui s'appuient sur l'aile intérieure du profilé de guidage 9.

Dans cette position, la rampe 1 peut être déplacée par l'intermédiaire du ou des chariots 4 dans le rail de guidage 6 le long du quai 3.

Selon une autre caractéristique de l'invention et comme le montre la figure 1, le rail de guidage 6 est avantageusement monté en retrait sur le quai 3 avec formation entre l'extrémité du quai et le rail 6 d'un glacis 19 légèrement en pente, aucun élément constitutif de la rampe et de son ou de ses chariots de déplacement et de guidage n'étant en contact avec ledit glacis 19, tant en position de service de la rampe (figure 1), qu'en position verticale de non-utilisation. Un tel glacis 19 permet, d'une part, de compenser l'encombrement en hauteur de la rampe 1 et de la tige 14 avec son ressort de compensation 15, d'autre part, une adaptation en hauteur en fonction de la hauteur du véhicule à charger ou à décharger et, enfin, un positionnement précis des véhicules directement contre le quai 3 sans risque de détérioration de la rampe lors de l'accostage. De plus, ce mode de réalisation supprime le vide de part et d'autre de la rampe, de sorte que la sécurité pour les manutentionnaires est accrue.

Conformément à une autre caractéristique de l'invention, représentée en détail à la figure 3, la traverse ou le dispositif de retenue 17 solidaire de la rampe 1, guidant l'extrémité libre de la tige 14, est pourvue d'un moyen 20 de blocage automatique en position verticale, à déblocage par application d'une poussée. Un tel moyen de blocage 20 est avantageusement constitué par une bille 21 chargée par un ressort 22 à pression réglable au moyen d'une vis 23 et coopérant avec une gorge circulaire 24 de l'extrémité de la tige 14, la gorge 24 se situant dans l'axe d'application de la bille 21 en position verticale de repos de la rampe 1. Le déblocage de ce moyen 20 est effectué automatiquement par application d'une forte poussée sur l'extrémité libre de la rampe 1. Ainsi, tout risque de destruction du moyen de blocage 20 par oubli de déverrouillage préalable est évité.

Grâce à l'invention, il est possible de réaliser une rampe de chargement adossée à actionnement manuel, compensée par ressorts, permettant une manoeuvre aisée de mise en et hors service, ainsi qu'un déplacement aisé le long du quai en position hors service. En outre, une telle rampe est parfaitement protégée contre tout risque de détérioration accidentelle et de pénétration de salissures dans ses moyens de guidage et de déplacement.

Enfin, elle est parfaitement adaptable à des niveaux de chargement différents.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Rampe de chargement adossée à actionnement manuel, compensée par ressorts, comportant un moyen (2) de montage avec possibilité de déplacement le long d'un quai (3), constitué par au moins un chariot (4) de support pivotant de la rampe (1) muni d'au moins un galet de roulement (5) coopérant avec un rail de guidage (6) s'étendant parallèlement au quai (3), caractérisée en ce que le rail de guidage (6) présente une section transversale en forme de U à branches horizontales de longueurs inégales, la branche supérieure étant la plus longue, le rail étant fixé contre le quai (3) par sa base qui est prolongée, au niveau de la branche la plus courte, par une aile d'application (7), la branche la plus longue présentant un rebord de retenue (8) destiné à coopérer avec le ou les chariots de support pivotant (4) de la rampe (1) et la branche la plus courte étant pourvue sur sa face interne d'un profilé de guidage et d'appui (9) coopérant, d'une part, pour le guidage, avec le ou les galets (5) du ou des chariots (4) et, d'autre part, pour la retenue en position de service, directement avec le ou lesdits chariots (4).

2. Rampe, suivant la revendication 1, caractérisée en ce que chaque chariot (4) présente avantageusement une section transversale en forme de U, dont l'une des branches, tournée vers le rail de guidage (6), est munie du ou des galets (5) et, à sa partie inférieure, près de sa base, d'une surface longitudinale (10), en retrait par rapport à la face extérieure de la branche et coopérant avec une aile externe du profilé de guidage et d'appui (9), sa branche externe étant pourvue à sa partie supérieure d'un axe (11) de guidage de la rampe (1).

3. Rampe, suivant l'une quelconque des revendications 1 et 2, caractérisée en ce qu'au moins un chariot (4) est pourvu à sa partie inférieure, dans le prolongement de sa base et obliquement vers le bas, d'un bras de levier (12), dont l'extrémité libre est munie d'un axe (13) de montage pivotant d'une tige (14) de guidage d'un ressort de compensation (15) s'appuyant à son extrémité inférieure sur un dispositif (16) de réglage de dureté du ressort et à son autre extrémité contre une traverse ou autre dispositif de retenue (17) solidaire de la rampe (1) près de son extrémité opposée, la tige (14) étant guidée en coulissement, par son extrémité libre, dans la traverse ou dispositif de retenue (17).

4. Rampe, suivant l'une quelconque des revendications 1 à 3, caractérisée en ce que la rampe (1) est montée dans le rail de guidage (6), au moyen d'au moins trois chariots (4), dont l'un au moins est pourvu d'un bras de levier (12) d'articulation d'une tige (14), les deux autres n'étant pas munis d'un tel bras de levier.

5. Rampe, suivant l'une quelconque des revendications 1 à 4, caractérisée en ce que chaque chariot (4) coopère, en outre, par l'espace en forme de rainure (18) délimité entre ses branches, avec le rebord de retenue (8), qui s'appuie contre sa brance pourvue sur sa face externe du ou des galets de roulement (5).

6. Rampe, suivant l'une quelconque des revendications 2 à 5, caractérisée en ce que la largeur de l'espace en forme de rainure (18) est au moins égale à l'épaisseur du rebord (8) augmentée de celle de la face supérieure de la rampe (1) solidaire de l'axe (11) de guidage en pivotement.

7. Rampe, suivant l'une quelconque des revendications 1 et 2, caractérisée en ce que le rail de guidage (6) est monté en retrait sur le quai (3) avec formation entre l'extrémité du quai et le rail (6) d'un glacis (19) légèrement en pente, aucun élément constitutif de la rampe et de son ou de ses chariots de déplacement et de guidage n'étant en contact avec ledit glacis (19), tant en position de service de la rampe, qu'en position verticale de non-utilisation.

8. Rampe, suivant la revendication 3, caractérisée en ce que la traverse ou le dispositif de retenue (17) solidaire de la rampe (1), guidant l'extrémité libre de la tige (14), est pourvue d'un moyen (20) de blocage automatique en position verticale, à déblocage par application d'une poussée.

9. Rampe, suivant la revendication 8, caractérisée en ce que le moyen de blocage (20) est constitué par une bille (21) chargée par un ressort (22) à pression réglable au moyen d'une vis (23) et coopérant avec une gorge circulaire (24) de l'extrémité de la tige (14), la gorge (24) se situant dans l'axe d'application de la bille (21) en position verticale de repos de la rampe (1).

## Claims

1. Manually actuated sloping spring-compensated loading ramp comprising an installation means (2) with the possibility of displacement along a quay (3), consisting of at least one carriage (4) for the pivoting support of the ramp (1) equipped with at least one wheel (5) cooperating with a guide rail (6) extending parallel to the quay (3), characterised in that the guide rail (6) has a U-shaped cross section with horizontal branches of unequal lengths, the upper branch being the longer, the rail being fixed against the quay (3) by its base which is extended, in the region of the shorter branch, by an application wing (7), the longer branch having a retaining flange (8) intended to cooperate with the carriage or carriages for the pivoting support (4) of the ramp (1) and the shorter branch being provided on its internal face with a guide and bearing profile (9) cooperating on the one hand for guidance with the wheel or wheels (5) of the carriage or carriages (4) and on the other hand for retention in the operating position directly with said carriage or carriages (4).

2. Ramp according to claim 1, characterized in that each carriage (4) advantageously has a U-shaped cross section of which one of the branches facing the guide rail (6) is equipped with the wheel or wheels (5) and, at its lower portion close to its base, with a longitudinal surface (10) offset from the external face of the branch and cooperating with an external wing of the guide and bearing profile (9), its external branch being provided at its upper portion with a shaft (11) for guiding the ramp (1).

3. Ramp according to any one of claims 1 and 2, characterized in that at least one carriage (4) is provided, at its lower portion, in the extension of its base and obliquely downwardly, with a lever arm (12) of which the free arm is equipped with a shaft (13) for the pivoting installation of a rod (14) for guiding a compensating spring (15) bearing at its lower end on a device (16) for adjusting the rigidity of the spring and at its other end against a cross member or other retaining device (17) integral with the ramp (1) close to its opposite end, the rod (14) being slidably guided by its free end in the cross member or retaining device (17).

4. Ramp according to any one of claims 1 to 3, characterised in that the ramp (1) is mounted in the guide rail (6) by means of at least three carriages (4) of which at least one is provided with a lever arm (12) for articulation of a rod (14), the other two not being equipped with such a lever arm.

5. Ramp according to any one of claims 1 to 4, characterised in that each carriage (4) also cooperates, via the groove-shaped space (18) delimited between its branches,with a retaining flange (8) which bears against its branch provided on its external face with the wheel or wheels (5).

6. Ramp according to any one of claims 2 to 5, characterised in that the width of the groove-shaped space (18) is at least equal to the thickness of the flange (8) increased by that of the upper face of the ramp (1) integral with the pivot guide shaft (11).

7. Ramp according to any one of claims 1 and 2, characterised in that the guide rail (6) is mounted in an offset manner on the quay (3), a slightly inclined descent (19) being formed between the end of the quay and the rail (6), no constituent element of the ramp and of its displacement and guiding carriage or carriages being in contact with said descent (19) either in the operating position of the ramp or in the vertical position of non-use.

8. Ramp according to claim 3, characterised in that the cross member or the retaining device (17) integral with the ramp (1) and guiding the free end of the rod (14) is provided with a means (20) for automatic locking in the vertical position, which can be unlocked by application of a thrust.

9. Ramp according to claim 8, characterised in that the locking means (20) consists of a ball (21) loaded by a spring (22) of which the pressure can be adjusted by means of a screw (23) and cooperating with a circular furrow (24) at the end of the rod (14), the furrow (24) being located in the axis for application of the ball (21) in the vertical rest position of the ramp (1).

## Patentansprüche

1. Angebaute Ladebühne für manuelle Betätigung mit Kompensation durch Federn, bestehend aus einer Aufbauvorrichtung (2), die entlang einer Rampe (3) bewegt werden kann, und aus mindestens einem um die Ladebühne (1) schwenkbaren Trägerschlitten (4), der mit mindestens einer Laufrolle (5) ausgestattet ist, die mit einer parallel zur Rampe (3) verlaufenden Führungsschiene (6) zusammenwirkt, **dadurch gekennzeichnet**, daß die Führungsschiene (6) einen querverlaufenden Abschnitt in U-Form mit waagerechten Seiten von unterschiedlicher Länge besitzt, wobei die obere Seite länger ist und über eine Rückhalteleiste (8) verfügt, die mit dem oder den um die Ladebühne (1) schwenkbaren Trägerschlitten (4) zusammenwirken soll, und die Schiene mit ihrer im Bereich der kürzeren Seite durch einen Anwendungsflügel (7) verlängerten Basis an der Rampe (3) befestigt ist, wobei die kürzere Seite auf der Innenseite mit einem Führungs- und Stützprofil (9) versehen ist, das einerseits hinsichtlich der Führung mit dem oder den Laufrollen (5) des oder der Trägerschlitten (4) zusammenwirkt, und andererseits, um die Ladebühne in der Betriebsstellung zu halten, direkt mit dem oder den genannten Trägerschlitten (4).

2. Ladebühne nach Anspruch 1, **dadurch gekennzeichnet**, daß jeder Trägerschlitten (4) vorzugsweise einen querverlaufenden Abschnitt in U-Form hat, wobei eine der Seiten des U der Führungsschiene (6) zugewandt und mit einer oder mehreren Laufrollen (5) und im unteren Bereich, in der Nähe der Basis, mit einer Längsfläche (10) versehen ist, die bezüglich der Außenfläche der Seite tiefer liegt und mit einem externen Flügel des Führungs- und Stützprofils (9) zusammenwirkt, wobei die äußere Seite im oberen Bereich mit einer Führungsachse (11) für die Ladebühne (1) ausgestattet ist.

3. Ladebühne nach einem der Ansprüche 1 oder 2, **dadurch gekennzeichnet**, daß mindestens ein Trägerschlitten (4) in seinem unteren Bereich, in Verlängerung seiner Basis und schräg nach unten verlaufend, mit einem Hebelarm (12) versehen ist, dessen freier Teil mit einer Aufbauachse (13) ausgestattet ist, die um eine Führungsstange (14) mit einer Kompensationsfeder (15) schwenkbar ist, die sich in ihrem unteren Bereich auf einen Regler (16) zur Einstellung der Federkraft und am anderen Ende gegen eine Traverse oder eine andere Rückhaltevorrichtung (17) stützt, die mit der Ladebühne (1) im Bereich des entgegengesetzten Endes fest verbunden ist, wobei die Stange (14) mit ihrem freien Ende in der Traverse oder der Rückhaltevorrichtung (17) gleitet.

4. Ladebühne nach einem der Ansprüche 1 bis 3, **dadurch gekennzeichnet**, daß die Ladebühne (1) mittels mindestens drei Trägerschlitten (4) in der Führungsschiene (6) angebracht ist und mindestens einer dieser Trägerschlitten mit einem Hebelarm (12) mit einem Gelenk für eine Führungsstange (14) versehen ist, während die anderen beiden nicht mit einem solchen Hebelarm ausgestattet sind.

5. Ladebühne nach einem der Ansprüche 1 bis 4, **dadurch gekennzeichnet**, daß jeder Trägerschlitten (4) außerdem über eine Nut (18) verfügt, die durch die Seiten des Trägerschlittens begrenzt ist und die Rückhalteleiste (8) aufnimmit, die an die Seite angelehnt ist, die auf der Außenfläche mit der oder den Laufrollen (5) versehen ist.

6. Ladebühne nach einem der Ansprüche 2 bis 5, **dadurch gekennzeichnet**, daß die Breite der Nut (18) mindestens der Dicke der Rückhalteleiste (8) plus der Dicke der Außenfläche der Ladebühne (1) entspricht, die mit der Führungsachse (11) schwenkbar fest verbunden ist.

7. Ladebühne nach einem der Ansprüche 1 und 2, **dadurch gekennzeichnet**, daß die Führungsschiene (6) weiter hinten auf der Rampe (3) montiert ist, wobei zwischen der Kante der Rampe und der Führungsschiene (6) eine leicht geneigte Abschrägung (19) besteht und keines der Elemente, aus denen sich die Ladebühne und der beziehungsweise die Trägerschlitten für die Bewegung und Führung zusammensetzen, mit dieser Abschrägung (19) in Berührung kommt, und zwar weder in Betriebsposition der Ladebühne noch in vertikaler Position bei Nichtbenutzung.

8. Ladebühne nach Anspruch 3, **dadurch gekennzeichnet**, daß die Traverse oder Rückhaltevorrichtung (17), die mit der Ladebühne (1) fest verbunden ist und die der Führung des freien Endes der Führungsstange (14) dient, mit einer Blockiervorrichtung (20) versehen ist, die automatisch in vertikaler Position wirkt und durch Drücken gelöst werden kann.

9. Ladebühne nach Anspruch 8, **dadurch gekennzeichnet**, daß die Blockiervorrichtung (20) durch eine Kugel (21) gebildet wird, die durch eine Feder (22) belastet wird, deren Druck mittels einer Schraube (23) regelbar ist, wobei diese Kugel mit einer kreisförmigen Auskehlung (24) am Ende der Führungsstange (14) zusammenwirkt, und wobei sich die Auskehlung (24) in vertikaler Ruheposition der Ladebühne (1) in der Anwendungsachse der Kugel (21) befindet.
